# EUROPEAN PATENT SPECIFICATION

(11) **EP 3 466 766 B1**
(45) Date of publication and mention of the grant of the patent: **14.04.2021**
(21) Application number: 18196972.6
(22) Date of filing: 26.09.2018
(51) Int. Cl.: B60R 9/06, B60D 1/06

(54) **A SUPPORT ASSEMBLY FOR A LOADING APPARATUS**
STÜTZANORDNUNG FÜR EINE LADEVORRICHTUNG
ENSEMBLE DE SUPPORT POUR UN APPAREIL DE CHARGEMENT

(30) Priority: 05.10.2017 IT 201700111960
(43) Date of publication of application: 10.04.2019
(73) Proprietor: F.LLI MENABO' S.R.L., 42025 Cavriago (Reggio Emilia) (IT)
(72) Inventor: SALSI, Andrea, 42011 Bagnolo in Piano (RE) (IT)
(74) Representative: Persi, Patrizia

(56) References cited:
- DE-A1-102013 004 484
- US-A1- 2014 210 186
- US-A2- 2016 243 907

## Description

This invention relates to a support assembly for a loading apparatus, that is to say, an assembly configured for supporting a loading apparatus fixed, or removably fixable, to the support assembly and also configured for removably hooking to a tow hitch.

More in detail, the invention relates to a support assembly configured for being mounted on a rear part of a vehicle which comprises a hooking part, which is equipped with a hooking cavity configured to receive a sphere of the tow hitch, and a positioning part of which acts in conjunction with positioning pins of the tow hitch for keeping the support assembly in position.

In order to transport a load on the rear of a vehicle, for example a cycle rack, a ski rack or additional luggage, it is possible to use a loading apparatus hooked to a rear tow hitch of a vehicle.

The tow hitch, which has a longitudinal plane of symmetry along which the tow hitch extends, is an additional element of a vehicle which is shaped like an open hook and can be fixed or removably fixable to the vehicle.

The tow hitch has a first end which is fixed, or removably fixable, to a structure of the bodywork of the vehicle, and a second end which is equipped with a sphere on which the support assembly is configured for hooking. The shape and dimensions of the tow hitch are not standard and vary in relation to the manufacturer of the tow hitch.

For a same type of vehicle there can therefore exist different types of approved tow hitches, which may differ from each other in terms of size of the sphere, curvature of the hook, or other details.

It follows that the support assembly needs to be designed for a specific tow hitch, for example because the shape and size of a hooking cavity of a hooking part of the support assembly must match those of the sphere. Tow hitches are known on the market which, in addition to the sphere on the second end, comprise a pair of positioning pins, configured to allow a correct positioning of the support assembly on the tow hitch. The positioning pins are positioned on the neck at a predetermined distance from the sphere and protrude from the neck transversely with respect to the plane of symmetry.

The supporting assembly developed for these specific types of tow hitches therefore comprises, in addition to the hooking part, a positioning part, which acts in conjunction with the positioning pins for keeping the support assembly in position. In detail, each positioning pin has a cylindrical surface configured for making contact, when the support assembly is mounted on the vehicle, with the positioning part on two opposite sides. The positioning part comprises, in effect, a pair of retaining surfaces which are placed in contact with a front portion and a rear portion of the cylindrical surface.

US2014210186 discloses a trailer coupling for motor vehicles comprising a ball neck, which is mountable at a first end on a rear part of a motor vehicle to be fixed to the vehicle by means of a ball neck holder and which carries a coupling ball at a second end, wherein one positioning body is arranged on the ball neck at a defined spacing from the coupling ball to position a load carrier holding arrangement attachable to the coupling ball and the ball neck.

US2015375585 discloses a trailer coupling for motor vehicles, comprising a ball neck which is mountable on a rear part of a motor vehicle so as to be fixed to the vehicle by means of a ball neck carrier and which carries a coupling ball, wherein at least one first positioning body extends along the ball neck over a preset distance and the at least one first positioning body extends transversely with respect to a development of the ball neck portion which carries said positioning body and away from said ball neck portion. DE102013004484 discloses a carrier clutch having a supporting projection portion connected with a position clamping element such that the supporting projection portion is displaced from a clamping position to a supporting position in which the supporting projection portion is supported on a coupling carrier element.

The technical purpose which forms the basis of the invention is to provide a different type of support assembly for a tow hitch equipped with a pair of positioning pins, which is configured for operating in conjunction with the positioning pins to guarantee a correct positioning between the support assembly and the tow hitch, which can be stably fixed to the tow hitch but which at the same time is inexpensive and easy to install in the tow hitch itself.

This aim is achieved by the support assembly made according to claim 1 and the relative dependent claims.

Further features and advantages of this invention are more apparent in the detailed description below, with reference to a preferred, non-restricting, embodiment of a support assembly as illustrated in the accompanying drawings, in which:
- Figure 1 is an axonometric view of a support assembly for a loading apparatus, mounted on a tow hitch, in a release configuration;
- Figure 2 is an axonometric view of the tow hitch of Figure 1 and an exploded view of the support assembly of Figure 1, with some parts cut away for clarity, showing a body and an activating lever of a fixing element;
- Figure 3 is an axonometric view of the fixing element of Figure 2;
- Figure 4 is a top view of the support assembly and of the tow hitch of Figure 1, in the release configuration;
- Figure 5 is a side view of the support assembly and of the tow hitch of Figure 1;
- Figure 6 is a cross section through a plane VI-VI of Figure 4 of the support assembly of Figure 1, in a release configuration;
- Figure 7 is the cross section view of the support assembly of Figure 6, in a fixing configuration.

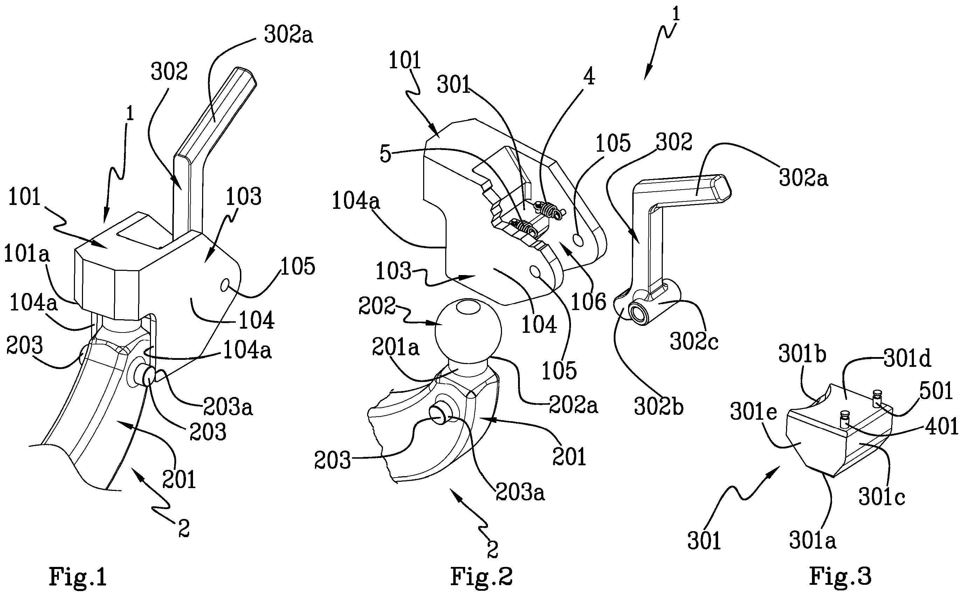

With reference to the above-mentioned Figures 1 to 7, the numeral 1 denotes a support assembly, made according to the invention, for a loading apparatus (not illustrated). The support assembly 1 is configured to be removably mounted to a tow hitch 2 of a vehicle (not illustrated). The loading apparatus may be, for example, a rear luggage rack for transporting additional items behind the car, a rear cycle carrier, or a ski rack. Without restricting the scope of the invention, the loading apparatus may be removably fixed to the support apparatus since, for example, it comprises a loading platform which can be removably fixed to the support assembly, or it may be made in a single body with the support assembly since, for example, the loading apparatus integrates the support assembly and the loading platform.

The tow hitch 2 has a plane of symmetry S, extends along said plane of symmetry S, and comprises a neck 201 having a first end fixed (not illustrated), or removably fixable, to a rear part of the vehicle and a second end provided with a sphere 202.

The tow hitch 2 also comprises a pair of positioning pins 203, configured for correctly positioning the support assembly 1, which are arranged on the neck 201 at a predefined distance from the sphere 202 and project from the neck 202 transversally with respect to the plane of symmetry S. The support assembly 1 comprises a body provided with a hooking part 101, which is provided with a hooking cavity 102 for receiving at least the sphere 202, and a positioning part 103, configured for cooperating with the positioning pins 203.

The hooking part 101 and the positioning part 103 are made in a single body. Without restricting the scope of the invention, there could be, alternatively, separate parts, fixed to each other

The positioning part 103 comprises a pair of positioning walls 104 between which the neck 201 is received at least partly. Each positioning wall 104 is positioned to make contact exclusively, when the support assembly 1 is mounted, with a rear surface 203a of a respective pin 203.

It should be noted that in this description the relative terms mentioned below, that is, front and/or rear, upper and/or lower, top and/or bottom refer to a support assembly 1, when the support assembly 1 is mounted on a vehicle.

The support assembly 1 also comprises a fixing device 3 for fixing the support assembly 1 against the tow hitch 2.

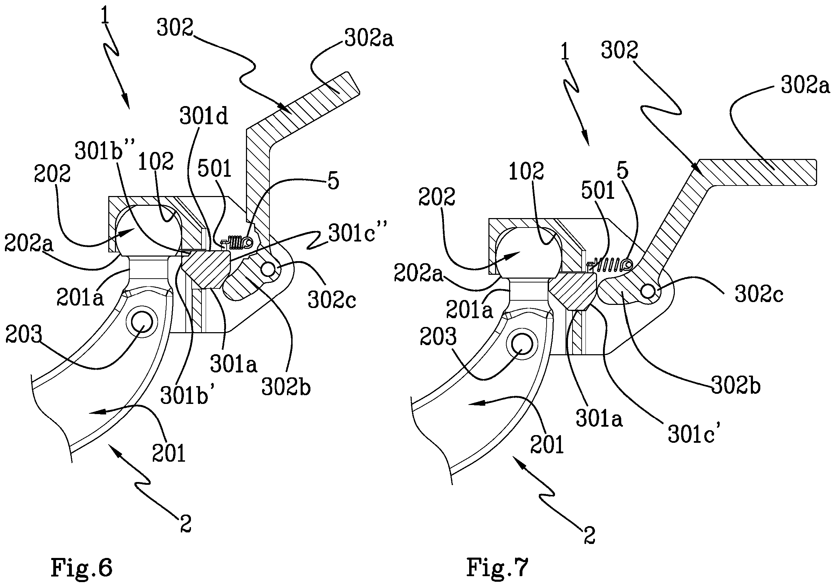

The fixing device 3 comprises a fixing element 301, which is movable between a fixing position (Figure 7) and a release position (Figure 6) and is configured for abutting a bottom section 202a of the sphere 202 and a head section 201a of the neck 201, contiguous to the bottom section 202a, when the support assembly 1 is mounted on the tow hitch 2 and the fixing element 301 is in the fixing position.

The term "head section 201a of the neck 201" is used to mean a part of the neck 201, contiguous with the sphere 202, which has a transversal cross section with a diameter smaller than the remaining part. The term "bottom section 202a of the sphere 202" means, on the other hand, a part of the sphere 202 between an equatorial plane (not illustrated) of the sphere 202 and the head section 201a of the neck 201. It should be noted that the equatorial plane of the sphere is a plane perpendicular to the plane of symmetry S.

Each positioning wall 104 has a respective positioning edge 104a, which is arranged for abutting the rear surface 203a of the positioning pin 203 and is transversal, in particular perpendicular, with respect to the plane of symmetry S.

The hooking cavity 102 has a bottom wall 102a, which is closed, and an opening 102b located on the opposite side of the bottom wall 102a for the insertion of the sphere 202 in the hooking part 101.

The opening 102b is delimited by an inserting edge 101a of the hooking part and by the pair of positioning edges 104a of the positioning walls 104. Advantageously, according to the invention, by using a support assembly 1, comprising the hooking part 101 to receive the sphere 202 and the positioning part 103 between the positioning walls 104 of which is received at least partly the neck 201 of the tow hitch 2, a user can easily place the sphere 202 in the hooking cavity 102 through the opening 102b and move the positioning edge 104a until making contact with the positioning pin 103.

When the positioning walls 104 are in contact with the positioning pin 103, the positioning of the support assembly 1 on the tow hitch 2 has been performed correctly.

Also, by using the fixing element 301 configured to make contact, in the fixing position, the bottom section 202a of the sphere 202 and the head section of 201a of the neck 201, the support assembly 1 is pushed against the sphere 202 and simultaneously also against the neck 201 and held firmly in position.

The fixing element 301 can be moved in a fixing direction, between the release position and the fixing position, which is parallel, in particular coincides, with the plane of symmetry S.

The fixing device 3 comprises an activating lever 302 which has a first end 302a with a handgrip which can be operated by a user and a second end 302b equipped with an activating portion.

The activating lever 302 is rotatable about a rotating portion 302c positioned between the first end 302a and the second end 302b so that a user, by activating the activating lever 302 in rotation about the rotating portion 302c from a raised configuration to a lowered position, brings the activating portion 302b initially to abut the fixing element 301 and subsequently to move the fixing element 301 between the release position and the fixing position in the fixing direction.

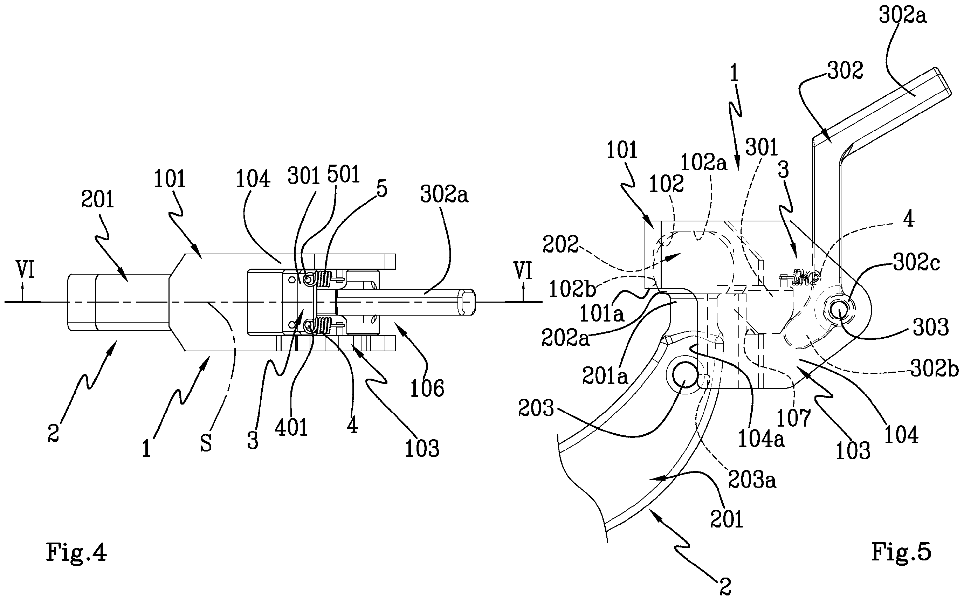

The fixing device 3 also comprises a rod 303 (Figure 5) having two ends, each of which is fixed to a respective positioning wall 104 at respective holes 105, the rotating portion 302c being shaped like a hollow cylindrical portion arranged to house the rod 303 so as to rotate about it.

Preferably, the positioning walls 104 are parallel to one another and parallel to the plane of symmetry S. The rod 303 is, on the other hand, transversal, in particular perpendicular, to the positioning walls 104. It follows, therefore, that the axis of rotation about which the activating lever 302 rotates is perpendicular to the plane of symmetry S.

The positioning part 103 comprises a fixing seat 106, defined between the positioning walls 104, which has a guide plane 107.

The fixing element 301 is housed in the fixing seat 106 and is a convex solid which has 6 faces, in pairs opposite each other. The fixing element 301 has a bottom face 301a arranged resting on the guide plane 107 when the fixing element 301 is moved between the fixing position and the rele1ase position. The bottom face 301a is flat.

The fixing element 301 comprises a first shaped face 301b, which is configured for abutting the bottom section 202a of the sphere 202 and the head section 201a of the neck 201, and is provided with a bottom portion 301b', having a complementary shape to the head section 201a of the neck 201, and a head portion 301b", having a complementary shape to the bottom section 202a of the sphere 202.

The fixing element 301 also comprises a second shaped face 301c, opposite the first shaped face 301b, which comprises a bottom portion 301c' shaped as a flat inclined surface, which is configured for abutting the activating portion 302b when the fixing element 301 is moved between the fixing position and the release position, and a head portion 301 c", which is configured as a flat surface, transversal to the plane of symmetry S, for abutting the activating portion 302b when the activating lever 302 is in the lowered configuration.

The fixing element 301 also has two remaining faces 301e, opposite to each other, which are flat and which are in contact, when the support assembly 1 is mounted on the tow hitch 2, with the positioning walls 104 so that the fixing element 301 slides on the guide plane 107 between the positioning walls 104.

When the support assembly 1 is mounted on the tow hitch 2, both the bottom portion 301b' of the first shaped face 301b and the bottom portion 301c' of the second shaped face 301c are positioned beneath the respective head portions 301b" and 301c". The activating portion of 302b is in fact shaped like a tapered cylinder, a side wall of which, when the activating lever 302 is in the raised position, is positioned parallel and in contact with the bottom portion 301c' of the second shaped face 301c. In this way, during the rotation of the activating lever 302 from the raised portion to the lowered portion, the side wall of the activating portion 302b slides on the bottom portion 301c' until its relative end makes contact with the head portion 301c'. In this way, the fixing element 301 is pushed towards the tow hitch 2.

The fixing element 301 has a head face 301d opposite the bottom face 301a, which is positioned upwards when the support assembly 1 is mounted on the tow hitch 2.

The support assembly 1 comprises in effect at least one elastic element 4, a first end of which is fixed to one of the positioning walls 104 and a second end of which is fixed to the head face 301d of the fixing element 301, for example to a pin 401 protruding from the head face 301d.

The elastic element 4 is in a rest configuration when the fixing element 301 is in the release position and is in an elongate configuration when the fixing element 4 is in the fixing position. The elastic element 4 therefore favours a movement of the fixing element 301 from the fixing position to the release position and keeps the fixing element 301 in contact with the activating portion 302b, when the activating lever 302 is activated by a user from the raised configuration to the lowered configuration.

The support assembly 1 also comprises a further elastic element 5, a first end of which is fixed to the other positioning wall 104 and a second end of which is fixed to the head face 301d, for example to a further pin 501 which is also protrudes from the head face 301d.

Only a few assembly steps are necessary, in use, for fixing the support assembly for 1 to the tow hitch 2.

A first assembly step comprises, initially, the user positioning the support assembly 1.

To do this, it is sufficient to position the sphere 202 in the cavity 102 of the hooking part 101 by inserting from above the hooking part 101 on the sphere 202 and then positioning the positioning walls 104 in contact with the positioning pins 103.

Thanks to the fact that the positioning walls 104 make contact solely with a rear surface 203a of the positioning pin 203, the user can easily put in position the positioning part 103, rotating it towards the tow hitch 2 until contact with the rear surface 203a of the positioning pin 103. In this way, the user can immediately perceive the correct positioning of the support assembly 1.

A second assembly step comprises the user fixing the support assembly 1 to the tow hitch 2. In order to do this, it is merely necessary, whilst gripping the handgrip 302a, to lower the activating lever 302 rotating it about the rod 303 so that the activating position 302b rotates upwards and raises it. Remaining in contact with the bottom portion 301c' of the second shaped surface 302c during lifting, the activating portion 302b pushes the fixing element 303, which is resting on the guide plane 107, towards the tow hitch 2. When the activating lever 302 is in the lowered position, the end of the activating portion 302b is in contact and pushes the head portion 301c" of the second shaped wall 301c towards the tow hitch 2. In this way, the bottom portion 301b' of the first shaped wall 301b makes contact with and pushes against the head section 201a of the neck 201, and the head portion 301b" of the first shaped wall 301b makes contact with and pushes against the bottom section 202a of the sphere 202.

Thanks to the fact that the first shaped wall 301b has the shape of the bottom section 202a of the sphere 202 and the head section 201a of the neck 201, the contact between the fixing element 301 and the sphere 2 is optimum and the fixing element 301 pushes effectively the support assembly against the tow hitch 2.

Thanks to the presence of a second shaped wall 301c, opposite the first shaped wall 301b, on which the activating portion 302b of the activating lever 302 acts, the fixing element 301 has reduced transversal dimensions. It follows that the fixing seat 106 may be also have reduced dimensions and a transversal dimension of the body formed by the hooking part 101 and the positioning part 103 may also be reduced.

## Claims

1. A support assembly (1) configured for supporting a loading apparatus, wherein the support assembly (1) is also configured for removably hooking to a vehicle tow hitch (2), the tow hitch (2) having a plane of symmetry (S), extending along said plane of symmetry (S), and comprising:
- a neck (201) having a first end fixed, or removably fixable, to a rear part of a vehicle and a second end provided with a sphere (202); a pair of positioning pins (203), configured for positioning the support assembly (1), which are arranged on the neck (201) at a predefined distance from the sphere (202) and project from the neck (201) transversally with respect to the plane of symmetry (S); wherein the support assembly (1) comprises:
- a body provided with a hooking part (101), which is provided with a hooking cavity (102) for receiving at least the sphere (202), and a positioning part (103), configured for cooperating with the positioning pins (203), the positioning part (102) comprising a pair of positioning walls (104) between which the neck (201) is at least partially accommodated, each positioning wall (104) being arranged for abutting, when the support assembly (1) is mounted, exclusively a rear surface (203a) of a respective positioning pin (203);
- a fixing device (3) comprising a fixing element (301), which is movable between a fixing position and a release position and is configured for abutting a bottom section (202a) of the sphere (202) and a head section (201a) of the neck (201), contiguous to said bottom section (202a), when the support assembly (1) is mounted and the fixing element (301) is in the fixing position.

2. The support assembly according to claim 1, wherein each positioning wall (104) has a respective positioning edge (104a), arranged for abutting said rear surface (203a), which is transversal, in particular perpendicular, with respect to the plane of symmetry (S).

3. The support assembly according to claim 2, wherein the hooking cavity (102) has a bottom wall (102a) that is closed and an opening (102b), arranged opposite to the bottom wall (102a), for inserting the sphere (202) in the hooking part (101); the opening being delimited by an inserting edge (101a) of the hooking part (101) and by the pair of positioning edges (104a) of the positioning walls (104).

4. The support assembly according to one of the preceding claims, wherein the fixing device (3) further comprises an activating lever (302) which has a first end (302a) provided with a grip activatable by a user, a second end (302b) provided with an activating portion; wherein the activating lever (302) is rotatable about a rotating portion (302c) positioned between the first end (302a) and the second end (302b) so that a user, by activating the activating lever (302) in rotation about the rotating portion (302c) from a raised configuration to a lowered position, brings the activating portion (302b) initially to abut the fixing element (301) and subsequently to move the fixing element (301) between the release position and the fixing position.

5. The support assembly according to claim 4, further comprising a rod (303) having two ends, each of which is fixed to a respective positioning wall (104), the rotating portion (302c) being configured as a hollow cylindrical portion arranged for housing the rod (303) so as to rotate about the rod.

6. The support assembly according to claim 5, wherein the positioning walls (104) are parallel to one another and parallel to said plane of symmetry (S) and wherein said rod (303) is transversal, in particular perpendicular to said positioning walls (104).

7. The support assembly according to one of the preceding claims, wherein the positioning part (102) comprises a fixing seating (105) defined between the positioning walls (104), which has a guide plane (107); the fixing element (301) being housed in the fixing seating (105) and having a bottom face (301a) arranged resting on the guide plane (107) when the fixing element (301) is moved between the fixing position and the release position.

8. The support assembly according to one of the preceding claims, wherein the fixing element (301) comprises a first shaped face (301b), for abutting said bottom section (202a) of the sphere (202) and said head section (201a) of the neck (201), which comprises a bottom portion (301b'), having a complementary shape to the head section (201a) of the neck (201), and a head portion (301b"), having a complementary shape to the bottom section (202a) of the sphere (202).

9. The support assembly according to claim 8, when dependent on one of claims from 4 to 6, wherein the fixing element (301) comprises a second shaped face (301c), opposite the first shaped face (301b), which comprises a bottom portion (301c') shaped as a flat inclined surface, which is configured for abutting the activating portion (302b) when the fixing element (301) is moved between the fixing position and the release position, and a head portion (301c"), which is configured as a flat surface for abutting the activating portion (302b) when the activating lever (302) is in the lowered configuration.

10. The support assembly according to claim 7, or according to claim 8, or 9, when dependent on claim 7, wherein the fixing element (301) has a head face (301d) opposite said bottom face (301a) and the support assembly (1) comprises at least an elastic element (4), a first end of which is fixed to one of the positioning walls (104) and a second end of which is fixed to the head face (301d), the elastic element (4) being in a rest configuration when the fixing element (301) is in the release position and being in an elongate configuration when the fixing element (301) is in the fixing position for facilitating a displacing of the fixing element (301) from the fixing position to the release position, while maintaining the fixing element (301) in abutment with the activating portion (302b), when the activating lever (302) is activated by a user from the lowered configuration to the raised configuration.

11. The support assembly according to claim 10 comprising a further elastic element (5), a first end of which is fixed to the other positioning wall (104) and a second end of which is fixed to the head face (301d), the elastic element (4) and the further elastic element (5) being symmetrically fixed to the head face (301d) on opposite sides with respect to the plane of symmetry (S).

## Patentansprüche

1. Stützanordnung (1), konfiguriert für das Tragen einer Ladevorrichtung, wobei die Stützanordnung (1) auch dafür konfiguriert ist, abnehmbar an eine Anhängerkupplung (2) eingehängt zu werden, wobei die Anhängerkupplung (2) eine Symmetrieebene (S) aufweist und sich entlang dieser Symmetrieebene (S) erstreckt, und umfassend:
- einen Hals (201), der ein erstes Ende aufweist, das am Heck eines Fahrzeuges befestigt ist oder abnehmbar befestigt werden kann, und ein zweites Ende, das mit einer Kugel (202) versehen ist; ein Paar Positionierstifte (203) zur Positionierung der Stützanordnung (1), die auf dem Hals (201) in einem vorgegebenen Abstand von der Kugel (202) angeordnet sind und von dem Hals (201) quergerichtet zu der Symmetrieebene (S) hervorstehen; wobei die Stützanordnung (1) umfasst:
- einen Körper, der mit einem Einhakteil (101) versehen ist, das eine Einhakaussparung (102) zur Aufnahme zumindest der Kugel (202) aufweist, und mit einem Positionierteil (103), der dafür ausgelegt ist, mit den Positionierstiften (203) zusammenzuwirken, wobei der Positionierteil (102) ein Paar Positionierungswände (104) umfasst, zwischen denen der Hals (201) zumindest teilweise untergebracht ist, wobei jede Positionierungswand (104) derart angeordnet ist, dass sie, wenn die Stützanordnung (1) montiert ist, ausschließlich gegen eine hintere Oberfläche (203a) eines entsprechenden Positionierstiftes (203) anschlägt;
- eine Befestigungsvorrichtung (3), umfassend ein Befestigungselement (301), das beweglich ist zwischen einer Fixierstellung und einer Freigabestellung und das dafür ausgelegt ist, gegen einen unteren Bereich (202a) der Kugel (202) und einen an diesen unteren Bereich (202a) angrenzenden Kopfbereich (201a) des Halses (201) anzuschlagen, wenn die Stützanordnung (1) montiert ist und das Befestigungselement (301) in der Fixierstellung ist.

2. Stützanordnung nach Anspruch 1, wobei jede Positionierungswand (104) einen entsprechenden Positionierungsrand (104a) aufweist, der angeordnet ist, um gegen die hintere Oberfläche (203a) anzuschlagen, und der quergerichtet, insbesondere orthogonal, zu der Symmetrieebene (S) ausgerichtet ist.

3. Stützanordnung nach Anspruch 2, wobei die Einhakaussparung (102) eine geschlossene Bodenwand (102a) und eine Öffnung (102b) aufweist, die der Bodenwand (102a) gegenüberliegt und zum Einführen der Kugel (202) in den Einhakteil (101) dient; wobei die Öffnung durch einen Einführrand (101a) des Einhakteils (101) und durch das Paar Positionierungsränder (104a) der Positionierungswände (104) begrenzt ist.

4. Stützanordnung nach einem der vorhergehenden Ansprüche, wobei die Befestigungsvorrichtung (3) ferner einen Betätigungshebel (302) umfasst, der an einem ersten Ende (302a) einen durch einen Benutzer zu betätigenden Griff aufweist, und an einem zweiten Ende (302b) einen Betätigungsabschnitt; wobei der Betätigungshebel (302) um einen Drehabschnitt (302c) drehbar ist, der zwischen dem ersten Ende (302a) und dem zweiten Ende (302b) angeordnet ist, so dass ein Benutzer, indem er den Betätigungshebel (302) um den Drehabschnitt (302c) aus einer angehobenen Konfiguration in eine abgesenkte Position dreht, bewirkt, dass zunächst der Betätigungsabschnitt (302b) gegen das Befestigungselement (301) anschlägt und anschließend das Befestigungselement (301) zwischen der Freigabestellung und der Fixierstellung bewegt wird.

5. Stützanordnung nach Anspruch 4, ferner umfassend eine Stange (303) mit zwei Enden, die jeweils an einer entsprechenden Positionierungswand (104) befestigt sind, wobei der Drehabschnitt (302c) als ein hohler Zylinderabschnitt ausgeführt ist, der angeordnet ist, um die Stange (303) aufzunehmen, so dass er sich um die Stange dreht.

6. Stützanordnung nach Anspruch 5, wobei die Positionierungswände (104) parallel zueinander und parallel zu der Symmetrieebene (S) sind und wobei die Stange (303) quergerichtet, insbesondere orthogonal, zu den Positionierungswänden (104) ausgerichtet ist.

7. Stützanordnung nach einem der vorhergehenden Ansprüche, wobei der Positionierteil (102) eine Befestigungsaufnahme (105) umfasst, die zwischen den Positionierungswänden (104) definiert ist und die eine Führungsfläche (107) aufweist; wobei das Befestigungselement (301) in der Befestigungsaufnahme (105) aufgenommen wird und eine Bodenfläche (301a) aufweist, die auf der Führungsfläche (107) aufliegend angeordnet ist, wenn das Befestigungselement (301) zwischen der Fixierstellung und der Freigabestellung bewegt wird.

8. Stützanordnung nach einem der vorhergehenden Ansprüche, wobei das Befestigungselement (301) eine erste profilierte Fläche (301b) als Anschlag für den unteren Bereich (202a) der Kugel (202) und den Kopfbereich (201a) des Halses (201) umfasst, die einen unteren Abschnitt (301b') umfasst, der komplementär zu dem Kopfbereich (201a) des Halses (201) geformt ist, und einen Kopfabschnitt (301b"), der komplementär zu dem unteren Bereich (202a) der Kugel (202) geformt ist.

9. Stützanordnung nach Anspruch 8, sofern von einem der Ansprüche von 4 bis 6 abhängig, wobei das Befestigungselement (301) eine zweite profilierte Fläche (301c) aufweist, die der ersten profilierten Fläche (301b) gegenüberliegt, die einen unteren Abschnitt (301c') in Form einer ebenen geneigten Oberfläche umfasst, der dafür ausgelegt ist, gegen den Betätigungsabschnitt (302b) anzuschlagen, wenn das Befestigungselement (301) zwischen der Fixierstellung und der Freigabestellung bewegt wird, und einen Kopfabschnitt (301c"), der dafür ausgelegt ist, als ebene Anschlagoberfläche für den Betätigungsabschnitt (302b) zu dienen, wenn sich der Betätigungshebel (302) in der abgesenkten Konfiguration befindet.

10. Stützanordnung nach Anspruch 7, oder nach Anspruch 8, oder 9, sofern von Anspruch 7 abhängig, wobei das Befestigungselement (301) eine Kopffläche (301d) gegenüber der Bodenfläche (301a) aufweist und die Stützanordnung (1) zumindest ein elastisches Element (4) umfasst, dessen erstes Ende an einer der Positionierungswände (104) befestigt ist und dessen zweites Ende an der Kopffläche (301d) befestigt ist, wobei das elastische Element (4) sich in einer Ruhekonfiguration befindet, wenn das Befestigungselement (301) in der Freigabestellung ist, und sich in einer ausgetreckten Konfiguration befindet, wenn das Befestigungselement (301) in der Fixierstellung ist, um eine Bewegung des Befestigungselements (301) aus der Fixierstellung in die Freigabestellung zu begünstigen, während das Befestigungselement (301) auf Anschlag mit dem Betätigungsabschnitt (302b) gehalten wird, wenn der Betätigungshebel (302) durch einen Benutzer aus der abgesenkten Konfiguration in die angehobene Konfiguration betätigt wird.

11. Stützanordnung nach Anspruch 10, umfassend ein weiteres elastisches Element (5), dessen erstes Ende an der anderen Positionierungswand (104) befestigt ist und dessen zweites Ende an der Kopffläche (301d) befestigt ist, wobei das elastische Element (4) und das weitere elastische Element (5) symmetrisch an der Kopffläche (301d) auf einander gegenüberliegenden Seiten in Bezug auf die Symmetrieebene (S) befestigt sind.

## Revendications

1. Un ensemble de support (1) configuré pour supporter un appareil de chargement, où l'ensemble de support (1) est également configuré pour être accroché de façon amovible à un crochet d'attelage (2), le crochet d'attelage (2) ayant un plan de symétrie (S), s'étendant le long dudit plan de symétrie (S), et comprenant :
- un col (201) ayant une première extrémité fixée, ou pouvant être fixée de façon amovible, à une partie arrière d'un véhicule et une deuxième extrémité munie d'une boule (202) ; une paire de goupilles de positionnement (203), configurées pour positionner l'ensemble de support (1), qui sont disposées sur le col (201) à une distance prédéfinie de la boule (202) et dépassent du col (201) transversalement par rapport au plan de symétrie (S) ; où l'ensemble de support (1) comprend :
- un corps muni d'une partie d'accrochage (101), qui est dotée d'une cavité d'accrochage (102) pour recevoir au moins la boule (202), et une partie de positionnement (103), configurée pour coopérer avec les goupilles de positionnement (203), la partie de positionnement (102) comprenant une paire de parois de positionnement (104) entre lesquelles le col (201) est au moins partiellement logé, chaque paroi de positionnement (104) étant disposée pour rencontrer, lorsque l'ensemble de support (1) est monté, exclusivement une surface arrière (203a) d'une goupille de positionnement (203) respective ;
- un dispositif de fixation (3) comprenant un élément de fixation (301), qui est mobile entre une position de fixation et une position de déblocage et est configuré pour rencontrer une section de fond (202a) de la boule (202) et une section de tête (201a) du col (201), contiguë à ladite section de fond (202a), lorsque l'ensemble de support (1) est monté et l'élément de fixation (301) est dans la position de fixation.

2. L'ensemble de support selon la revendication 1, dans lequel chaque paroi de positionnement (104) a un bord de positionnement (104a) respectif, disposé pour rencontrer ladite surface arrière (203a), qui est transversal, en particulier perpendiculaire, par rapport au plan de symétrie (S).

3. L'ensemble de support selon la revendication 2, dans lequel la cavité d'accrochage (102) a une paroi de fond (102a) qui est fermée et une ouverture (102b), disposée à l'opposé de la paroi de fond (102a), pour l'insertion de la boule (202) dans la partie d'accrochage (101) ; l'ouverture étant délimitée par un bord d'insertion (101a) de la partie d'accrochage (101) et par la paire de bords de positionnement (104a) des parois de positionnement (104) .

4. L'ensemble de support selon l'une des revendications précédentes, dans lequel le dispositif de fixation (3) comprend en outre un levier d'actionnement (302) qui a une première extrémité (302a) munie d'une poignée pouvant être actionnée par un utilisateur, une deuxième extrémité (302b) munie d'une portion d'actionnement ; dans lequel le levier d'actionnement (302) peut tourner autour d'une portion de rotation (302c) positionnée entre la première extrémité (302a) et la deuxième extrémité (302b) de manière à ce qu'un utilisateur, en actionnant le levier d'actionnement (302) en rotation autour de la portion de rotation (302c) d'une configuration levée à une configuration abaissée, amène la portion d'actionnement (302b) initialement à rencontrer l'élément de fixation (301) puis à déplacer l'élément de fixation (301) entre la position de déblocage et la position de fixation.

5. L'ensemble de support selon la revendication 4, comprenant en outre une tige (303) ayant deux extrémités, dont chacune est fixée à une paroi de positionnement (104) respective, la portion de rotation (302c) étant configurée comme une portion cylindrique creuse disposée pour loger la tige (303) de manière à tourner autour de la tige.

6. L'ensemble de support selon la revendication 5, dans lequel les parois de positionnement (104) sont parallèles entre elles et parallèles audit plan de symétrie (S) et dans lequel ladite tige (303) est transversale, en particulier perpendiculaire auxdites parois de positionnement (104).

7. L'ensemble de support selon l'une des revendications précédentes, dans lequel la partie de positionnement (102) comprend un logement de fixation (105) défini entre les parois de positionnement (104), qui a un plan de guidage (107) ; l'élément de fixation (301) étant logé dans le logement de fixation (105) et ayant une face de fond (301a) logée en appui sur le plan de guidage (107) lorsque l'élément de fixation (301) est déplacé entre la position de fixation et la position de déblocage.

8. L'ensemble de support selon l'une des revendications précédentes, dans lequel l'élément de fixation (301) comprend une première face profilée (301b), pour rencontrer ladite section de fond (202a) de la boule (202) et ladite section de tête (201a) du col (201), qui comprend une portion de fond (301b'), ayant une forme complémentaire à la section de tête (201a) du col (201), et une portion de tête (301b"), ayant une forme complémentaire à la section de fond (202a) de la boule (202).

9. L'ensemble de support selon la revendication 8, quand dépendant de l'une des revendications de 4 à 6, dans lequel l'élément de fixation (301) comprend une deuxième face profilée (301c), opposée à la première face profilée (301b), qui comprend une portion de fond (301c') profilée comme une surface plane inclinée, qui est configurée pour rencontrer la portion d'actionnement (302b) lorsque l'élément de fixation (301) est déplacé entre la position de fixation et la position de déblocage, et une portion de tête (301c"), qui est configurée comme une surface plate pour rencontrer la portion d'actionnement (302b) lorsque le levier d'actionnement (302) est dans la configuration abaissée.

10. L'ensemble de support selon la revendication 7, ou selon la revendication 8, ou 9, quand dépendant de la revendication 7, dans lequel l'élément de fixation (301) a une face de tête (301d) opposée à ladite face de fond (301a) et l'ensemble de support (1) comprend au moins un élément élastique (4), dont une première extrémité est fixée à une des parois de positionnement (104) et dont une deuxième extrémité est fixée à la face de tête (301d), l'élément élastique (4) étant dans une configuration de repos lorsque l'élément de fixation (301) est dans la position de déblocage et étant dans une configuration allongée lorsque l'élément de fixation (301) est dans la position de fixation pour faciliter un déplacement de l'élément de fixation (301) de la position de fixation à la position de déblocage, tout en maintenant l'élément de fixation (301) en butée avec la portion d'actionnement (302b), lorsque le levier d'actionnement (302) est actionné par un utilisateur de la configuration abaissée à la configuration levée.

11. L'ensemble de support selon la revendication 10, comprenant un autre élément élastique (5), dont une première extrémité est fixée à l'autre paroi de positionnement (104) et dont une deuxième extrémité est fixée à la face de tête (301d), l'élément élastique (4) et l'autre élément élastique (5) étant fixés symétriquement à la face de tête (301d) sur des côtés opposés par rapport au plan de symétrie (S) .
